# EUROPEAN PATENT SPECIFICATION

(11) **EP 4 270 617 B1**
(45) Date of publication and mention of the grant of the patent: **30.09.2026**
(21) Application number: 22215305.8
(22) Date of filing: 21.12.2022
(51) Int. Cl.: H01M 10/653, H01M 10/6555, H01M 50/209, H01M 50/264, H01M 50/291, H01M 50/249

(54) **BATTERY MODULE ASSEMBLY, MANUFACTURING METHOD THEREOF AND VEHICLE HAVING THE SAME**
BATTERIEMODULANORDNUNG, HERSTELLUNGSVERFAHREN DAFÜR UND FAHRZEUG DAMIT
ENSEMBLE MODULE DE BATTERIE, SON PROCÉDÉ DE FABRICATION ET VÉHICULE LE COMPRENANT

(30) Priority: 28.03.2022 KR 20220037756
(43) Date of publication of application: 01.11.2023
(73) Proprietor: Hyundai Mobis Co., Ltd., Gangnam-gu Seoul 06141 (KR)
(72) Inventor: PARK, Yun Su, 18484 Hwaseong-si (KR)
(74) Representative: Frenkel, Matthias Alexander

(56) References cited:
- WO-A2-2011/047067
- JP-A- 2008 277 085
- JP-B2- 5 405 102
- US-A1- 2012 003 526
- US-A1- 2015 263 397
- US-B2- 10 062 878

## Description

This application claims the benefit of Korean Application No.10-2022-0037756, filed on March 28, 2022.

### BACKGROUND

### Field

The present disclosure relates to a battery module assembly, and more particularly, to a battery module assembly that improves battery performance by effectively proposing a structure of the battery module assembly including a plurality of cells.

### Discussion of the Related Art

Generally, a battery module assembly has a structure in which a plurality of battery cells are aggregated, and a plurality of the battery cells are arranged and stacked in one direction to form a cell array. A cell array in which battery cells are stacked in one direction may be bound by limited movement by plates or frames surrounding the cells and may form a battery module assembly.

Patent Document 1 (Publication Patent No. 10-2018-0035174) discloses an example of a conventional battery module assembly. A battery module of Patent Document 1 discloses a battery module consisting of a cell array including a plurality of cells and plates enclosing the cell array, and the battery module of Patent Document 1 has an air inlet space between the plate and the cell array to increase a cooling effect of the cells.

However, the technology of the conventional battery module assembly including Patent Document 1 is difficult to standardize and share components configuring a module as the size of battery cells is diversified, and accordingly, has the problem of the excessive production facility/line investment cost. In addition, in case of a pouch cell, it is difficult to design a cell fixing structure, and it is required to apply an internal buffer structure of the battery module due to changes in cell thickness in accordance with charging/discharging and durability. In addition, a cylindrical cell has a problem in that space efficiency is reduced due to excessive dead space and a problem in that unit volume energy of the battery module assembly is low.

For the above problems or other various problems, it is still necessary to improve the technology to increase the durability and battery efficiency of the battery module assembly.

US 2015/263397 A1 discloses a battery assembly also include an exo-support structure including a plurality of retainer segments configured to support the upper and lower ends of an array of cells and a thermal plate defining one or more channels extending along the exterior of the array of cells. Thermal plate may directly contact the cells for thermal conduction.

WO 2011/047067 A2 discloses a battery module that includes a plurality of electrochemical cells provided side-by-side one another and a thermal management feature extending substantially the length of the battery module. The thermal management feature is coupled to a first side of each of the electrochemical cells and includes a passage through which a thermal management fluid may pass and a heat sink provided within the passage to transfer heat between the electrochemical cells and the thermal management fluid.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

According to the present invention, a battery module assembly and a method of manufacturing a battery module are set forth in the independent claims. In one general aspect, a battery module assembly includes a cell array configured by stacking a plurality of cells in a same direction, and a side plate connected to one lateral side of the cell array to pressurize the cell array. Plural ones of the cell array are connected in a transverse direction to form a multi-row structure.

The battery module assembly further includes an inner guide bracket disposed between the plural ones of the cell array. The inner guide bracket has an I-type cross-section with a top flange and a bottom flange.

The inner guide bracket includes a rib protruding from a WEB to extend in a longitudinal direction of the inner guide bracket.

The inner guide bracket includes a cell contact part connected to a WEB to contact the cell array.

The contact part may be connected to the WEB in a range of 0.5 H to 1 H of a height (H) of the WEB.

The bottom flange of the inner guide bracket may be configured to support the cell array, and a bottom side of the top flange may be configured to contact the cell array.

The battery module assembly may further include side guide brackets disposed adjacent to outermost transverse surfaces of the plural ones of the cell array. Each of the side guide brackets may include a bottom support portion supporting a bottom side of the cell array.

Each of the side guide brackets may be configured to extend in a longitudinal direction of the cell array and may include a plurality of ribs formed on an outer surface of each of the side guide brackets, and each of the ribs may be spaced apart from another by a prescribed interval in a vertical direction.

Each of the side guide brackets may include a cell contact part connected to an inner surface to contact with the cell array. The cell contact part may be a semi-solid type.

The battery module assembly may further include a tightening band disposed outside of the side guide bracket along the prescribed interval of the ribs to enclose and tighten outer surfaces of the plural ones of the cell array. The tightening band may be made of a metal material.

The cells may include prismatic battery cells.

In another general aspect, a method of manufacturing a battery module includes configuring at least two cell arrays by stacking, for each of the at least two cell arrays, a plurality of battery cells in a same direction; forming a multi-row structure by connecting the at least two cell arrays in a transverse direction; and cinching sides of the at least two cell arrays disposed in the multi-row structure with a side plate.

The forming of the multi-row structure includes disposing an inner guide bracket having an I-type cross section with a top flange and a bottom flange between the at least two cell arrays.

The inner guide bracket includes a rib protruding from a WEB to extend in a longitudinal direction of the inner guide bracket.

The inner guide bracket includes a cell contact part connected to the WEB to contact with the cell array.

In another general aspect, a battery module assembly includes a cell array having a plurality of cells stacked in a same direction, a side guide bracket disposed adjacent to a lateral side of the cell array, and an inner guide bracket disposed between plural ones of the cell array. The plural ones of the cell array are arranged in a transverse direction. The inner guide bracket includes an I-type cross-section having a top flange and a bottom flange and extends in a longitudinal direction of the cell arrays. The top flange is configured to contact a top side of the cell array, and the bottom flange is configured to contact a bottom side of the cell array.

The side guide bracket may include a guide on an outer surface to indicate a position of a tightening band. The tightening band may cinch lateral sides of the cell arrays along the guide provided to the other surface of the side guide bracket.

A vehicle may include the battery module assembly.

Other features and aspects will be apparent from the following detailed description, the drawings, and the claims.

### BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure. The above and other aspects, features, and advantages of the present disclosure will become more apparent upon consideration of the following description of preferred embodiments, taken in conjunction with the accompanying drawing figures. In the drawings:
FIG. 1 is an exploded perspective diagram of a battery module assembly according to a first embodiment of the present disclosure, including a diagram showing a perspective diagram thereof;
FIGs. 2 (a) to 2 (c) are diagrams to describe components of a battery module assembly according to a first embodiment of the present disclosure;
FIG. 3 is an exploded perspective diagram of a battery module assembly according to a second embodiment of the present disclosure, including a diagram showing a perspective diagram thereof;
FIG. 4 (a) to FIG. 4 (b) diagrams to describe components of a battery module assembly according to a second embodiment of the present disclosure;
FIG. 5 (a) and FIG. 5 (b) are diagrams showing components of a battery module assembly according to a second embodiment of the present disclosure to describe a heat transfer path thereof;
FIG. 6 is a cross-sectional diagram of an inner guide bracket of a battery module assembly according to a third embodiment of the present disclosure; and
FIG. 7 (a) and FIG. 7 (b) are diagrams to describe heat transfer paths of a 1-row battery module assembly and a 2-row battery module assembly.

### DETAILED DESCRIPTION

The following detailed description is provided to assist the reader in gaining a comprehensive understanding of the methods, apparatuses, and/or systems described herein. However, various changes and modifications of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after understanding of the disclosure of this application may be omitted for increased clarity and conciseness.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

Throughout the specification, when an element, such as a layer, region, or substrate, is described as being "on," "connected to," or "coupled to" another element, it may be directly "on," "connected to," or "coupled to" the other element, or there may be one or more other elements intervening therebetween. In contrast, when an element is described as being "directly on," "directly connected to," or "directly coupled to" another element, there can be no other elements intervening therebetween.

As used herein, the term "and/or" includes any one and any combination of any two or more of the associated listed items.

Although terms such as "first," "second," and "third" may be used herein to describe various members, components, regions, layers, or sections, these members, components, regions, layers, or sections are not to be limited by these terms. Rather, these terms are only used to distinguish one member, component, region, layer, or section from another member, component, region, layer, or section. Thus, a first member, component, region, layer, or section referred to in examples described herein may also be referred to as a second member, component, region, layer, or section without departing from the teachings of the examples.

Spatially relative terms such as "above," "upper," "below," and "lower" may be used herein for ease of description to describe one element's relationship to another element as shown in the figures. Such spatially relative terms are intended to encompass different orientations of the device in use or operation in addition to the orientation depicted in the figures. For example, if the device in the figures is turned over, an element described as being "above" or "upper" relative to another element will then be "below" or "lower" relative to the other element. Thus, the term "above" encompasses both the above and below orientations depending on the spatial orientation of the device. The device may also be oriented in other ways (for example, rotated 90 degrees or at other orientations), and the spatially relative terms used herein are to be interpreted accordingly.

The terminology used herein is for describing various examples only, and is not to be used to limit the disclosure. The articles "a," "an," and "the" are intended to include the plural forms as well, unless the context clearly indicates otherwise. The terms "comprises," "includes," and "has" specify the presence of stated features, numbers, operations, members, elements, and/or combinations thereof, but do not preclude the presence or addition of one or more other features, numbers, operations, members, elements, and/or combinations thereof.

Due to manufacturing techniques and/or tolerances, variations of the shapes shown in the drawings may occur. Thus, the examples described herein are not limited to the specific shapes shown in the drawings, but include changes in shape that occur during manufacturing.

The features of the examples described herein may be combined in various ways as will be apparent after an understanding of the disclosure of this application. Further, although the examples described herein have a variety of configurations, other configurations are possible as will be apparent after an understanding of the disclosure of this application. The invention is defined in the appended claims.

Accordingly, embodiments of the present disclosure are directed to a battery module assembly that substantially obviates one or more problems due to limitations and disadvantages of the related art.

One object of the present disclosure is to provide a battery module assembly having a multi-row structure.

Another object of the present disclosure is to provide a battery module assembly having a multi-row structure with increased cooling effect, durability, and rigidity.

In addition, according to one of embodiments of the present disclosure, a battery module assembly having an increased cooling effect for a multi-row cell array is provided.

In addition, according to one of embodiments of the present disclosure, a battery module assembly with increased durability for a multi-row cell array is provided.

In addition, according to one of embodiments of the present disclosure, a battery module assembly facilitating commonization or standardization of components by ensuring the degree of freedom in the number of cells of a cell array is provided.

In addition, according to one of embodiments of the present disclosure, it is advantageous in fixing a cell array and preventing swelling thereof.

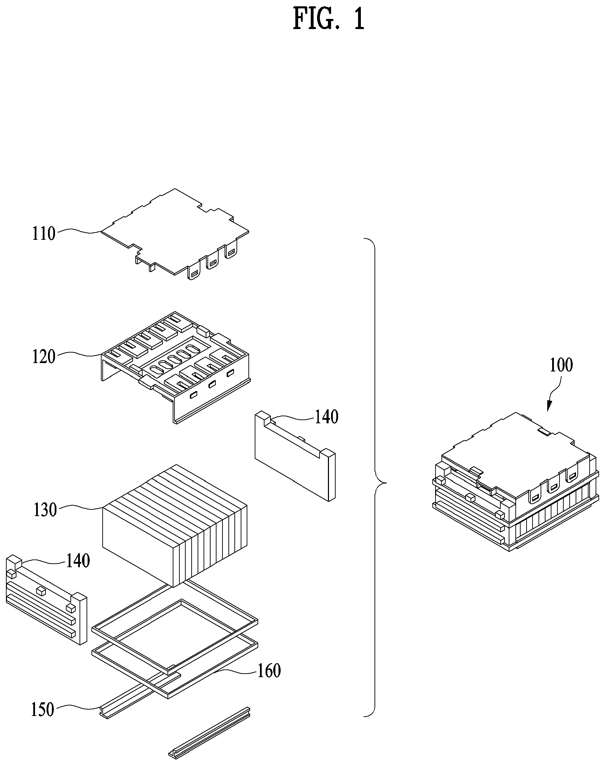

FIG. 1 is an exploded perspective diagram of a battery module assembly according to a first embodiment of the present disclosure, including a diagram showing a perspective diagram thereof.

Referring to FIG. 1, a battery module assembly 100 may include a cover 110 disposed at the top, a BUS-bar housing assembly 120 disposed under the cover 110, a cell array 130 connected to a bottom of the BUS-bar housing assembly 120, a pair of side plates 140 disposed adjacent to both confronting sides of the cell array 130, respectively, side guide brackets 150 disposed adjacent to the rest of the sides of the cell array 130, respectively, and a tightening band 160 binding to combine the cell array 130.

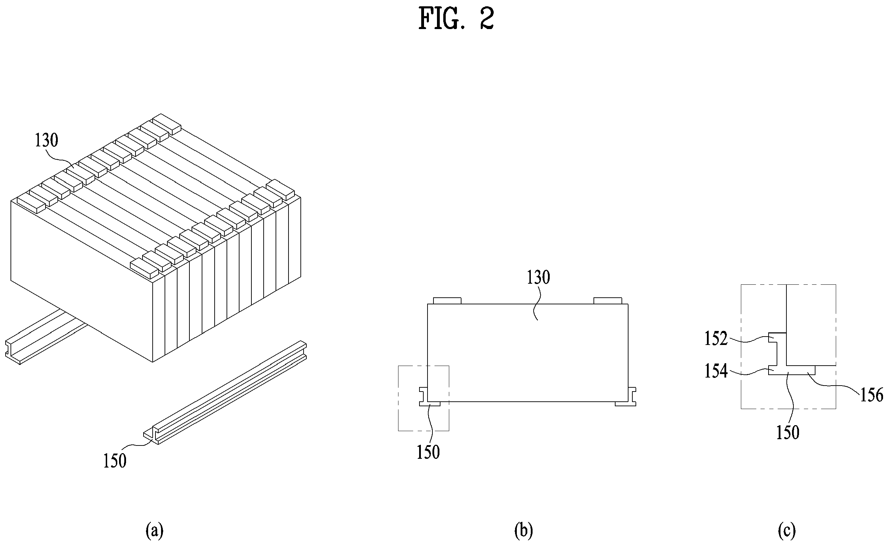

FIG. 2 shows some of the components of the battery module assembly 100 according to the first embodiment of the present disclosure in detail. FIG. 2 (a) shows that the cell array 130 and the side guide brackets 150 are separated from each other. FIG. 2 (b) is a front diagram showing that the cell array 130 and the side guide brackets 150 are coupled together. FIG. 2 (c) is a cross-sectional diagram of the side guide bracket 150 by enlarging a rectangular part shown in FIG. 2 (b).

The cover 110 has a function of protecting a top side of the battery module assembly 100, and may include a top, cap, or lid that may be appropriately implemented by those skilled in the art according to a shape or size suitable for an upper shape of the cell array 130 or the BUS-bar housing assembly 120.

The BUS-bar housing assembly 120 is an assembly of a plurality of BUS-bars in contact with an electrode lead (or cell tabs of a plurality of cells or a housing capable of accommodating a plurality of BUS-bars. The BUS-bar housing assembly 120 may be appropriately designed by those skilled in the art according to the arrangement of a plurality of the cells of the cell array 130.

As shown in FIG. 1 and FIG. 2 (a), the cell array 130 may be configured by stacking a plurality of battery cells in one direction. The battery cell contains a cylindrical cell, a pouch cell, or a prismatic cell. The number of a plurality of the battery cells constituting one cell array 130 is in a range that may be appropriately selected by those skilled in the art. The cell array 130 shown in FIG. 1 and FIG. 2 (a) is characterized in that a plurality of the battery cells are stacked and grouped in one row, which is different from a cell array y 230 of a second embodiment to be described later.

The side plate 140 is configured with a pair of plates disposed adjacent to one and another sides of the cell array 130. The side plate 140 is disposed in a manner of being adjacent to each of lateral sides of first and last cells along a direction in which the cells configuring the cell array 130 are stacked. The side plate 140 may regulate a position of the tightening band 160 by having a guide protruding from an outer surface thereof.

The side guide bracket 150 is configured to be disposed adjacent to each of the rest of the lateral sides of the cell array 130. The side guide bracket 150 supports a bottom side of the cell array 130, and may guide a position of the tightening band 160 by having ribs protruding from an outer surface thereof. Specifically, referring to FIG. 2 (b) and FIG. 2 (c), the side guide bracket 150 may be disposed adjacent to an outermost transverse surface of the cell array 130, and may have its length extended in a longitudinal direction of the cell array 130 by having an L-shaped cross-section. A bottom support part 156 has a prescribed width to support a bottom side of the cell array 130, and a plurality of ribs (e.g., a first rib and a second rib) protrude from an outer surface of the side guide bracket 150 so as to be extended in a longitudinal direction of the cell array 130. In addition, as the first and second ribs 152 and 154 are formed to leave a prescribed space from each other vertically, they may play role as a guide to regulate a position of the tightening band 160. The number of a plurality of the ribs, a width of the bottom support part 156, a height of the side support part (e.g., a part contacting with a lateral side of the cell array) and the like may be appropriately selected by those skilled in the art. The side guide bracket 150 may be fabricated by aluminum compression.

The tightening band 160 is configured to couple the side plate 140, the side guide bracket 150 and the cell array 130 together. The tightening band 160 may enclose a lateral side of the cell array 130 along the guide formed on the outer surfaces of the side plate 140 and the side guide bracket 150 so that the side plate 140, the side guide bracket 150, and the cell array 130 are bound to each other. Elastically bound configurations (e.g., the side plate and the side guide bracket) of the tightening band 160 may pressurize the cell array 130 to strengthen the coupling of a plurality of the cells or the coupling between the configurations. The tightening band 160 may be formed of a metal material or other elastic material to strongly couple the components. The vertical position of the tightening band 160 may be regulated by a guide formed on the outer surface of the side plate 140 or the side guide bracket (or a gap between ribs). The tightening band 160 compresses the cell array 130, and the compression amount of the cell array 130 may be managed within an appropriate range by the tightening band 160.

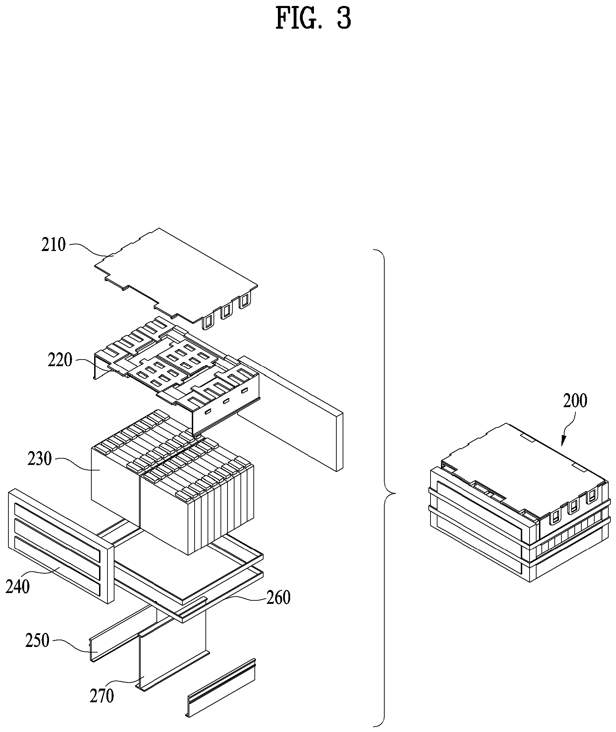

FIG. 3 is an exploded perspective diagram of a battery module assembly 200 according to a second embodiment of the present disclosure (hereinafter a battery module assembly), including a diagram showing a perspective diagram thereof;

Referring to FIG. 3, a battery module assembly 200 may include a cover 210 disposed at the top, a BUS-bar housing assembly 220 disposed under the cover 210, a cell array 230 connected to a bottom of the BUS-bar housing assembly 220, a pair of side plates 240 disposed adjacent to both confronting sides of the cell array 230, respectively, side guide brackets 250 disposed adjacent to the rest of the lateral sides of the cell array 130, respectively, an inner guide bracket 270 disposed inside the cell array 230, and a tightening band 260 binding to combine the side plates 240, the side guide brackets 250, the inner guide bracket 270, and the cell array 230.

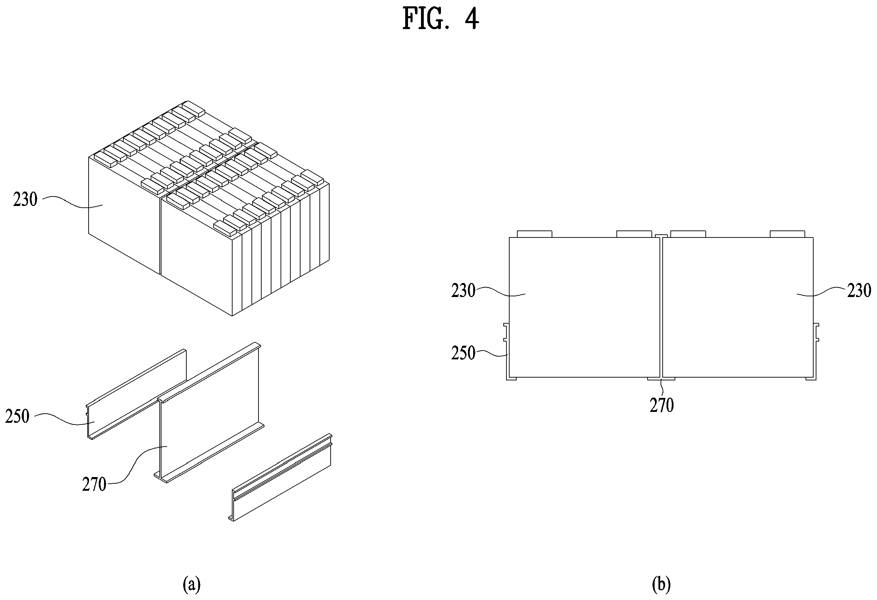

FIG. 4 shows some components of the battery module assembly 200 according to the second embodiment of the present disclosure. FIG. 4 (a) is an exploded perspective diagram showing the cell array 230, the side guide brackets 250, and the inner guide bracket 270. FIG. 4 (b) is a front diagram showing a state that the cell array 130, the side guide brackets 250 and the inner guide bracket 270 are coupled together.

The descriptions of the cover 210, the BUS-bar housing assembly 220, the side plate 240, the side guide bracket 250, and the tightening band 260 of the battery module assembly 200 according to the second embodiment are common to those described in the first embodiment, and thus will be omitted.

In the second embodiment, at least two cell arrays 230 may form a multi-row structure. The cell array 130 illustrated in FIG. 1 and FIG. 2 (a) is formed by stacking and grouping a plurality of battery cells in a row, whereas in the second embodiment, a plurality of cell arrays 230 are provided to form a plurality of rows. As shown in FIG. 3 and FIG. 4, two cell arrays 230 may be connected in a transverse direction to form a multi-row structure. In addition, three or more cell arrays 230 may be connected in a transverse to form a multi-row structure.

The inner guide bracket 270 is disposed between the cell arrays 230 connected in the transverse direction, has an I-shaped cross section, and extends in a longitudinal direction of the cell arrays 230. The I-type cross-section includes a top flange and a bottom flange, and may be referred to as an H-type cross-section when the width of the flange is large. The I-type cross-section may include a top flange, a bottom flange, and a WEB vertically connecting the flanges. The bottom flange of the inner guide bracket 270 supports a bottom side of the cell array 230, and the bottom flange contacts a top side of the cell array 230. That is, the height of the WEB may be the same as or similar to the height of the cell array 230. Accordingly, the cell array 230 may be fitted in the space between the top flange and the bottom flange of the inner guide bracket 270.

The width of the top flange of the inner guide bracket 270 may be appropriately designed by those skilled in the art so as not to interfere with the electrode of the battery cell while appropriately regulating the cell array 230. The width of the bottom flange of the inner guide bracket 270 may be designed by those skilled in the art to properly support a bottom side of the cell array 230 while regulating the cell array 230. The width of the bottom flange is formed larger than the width of the top flange, which may minimize the component size while supporting the cell array 230 and regulating the movement of the cell array 230.

The inner guide bracket 270 has an I-type cross-section to reinforce the flexural rigidity of the battery module assembly 200, serves as a path for discharging heat generated from each cell array 230 downward, and increases durability by regulating the position of the cell assembly 230 to raise the integrity of the entire assembly.

Unlike the first embodiment, the side guide bracket 250 according to the second embodiment has a higher height of a side support portion. The dimensions of each part constituting the side guide bracket 250 may be appropriately modified by those skilled in the art. The side guide bracket 250 may be disposed adjacent to the outermost lateral surface of a plurality of the cell arrays 230.

The tightening band 260 according to the second embodiment may be disposed along a gap between a plurality of ribs (or may be referred to as a guide) protruding from an outer surface of the side plate 240 or the side guide bracket 250, and may couple components while enclosing the outermost surfaces of at least two cell arrays 230.

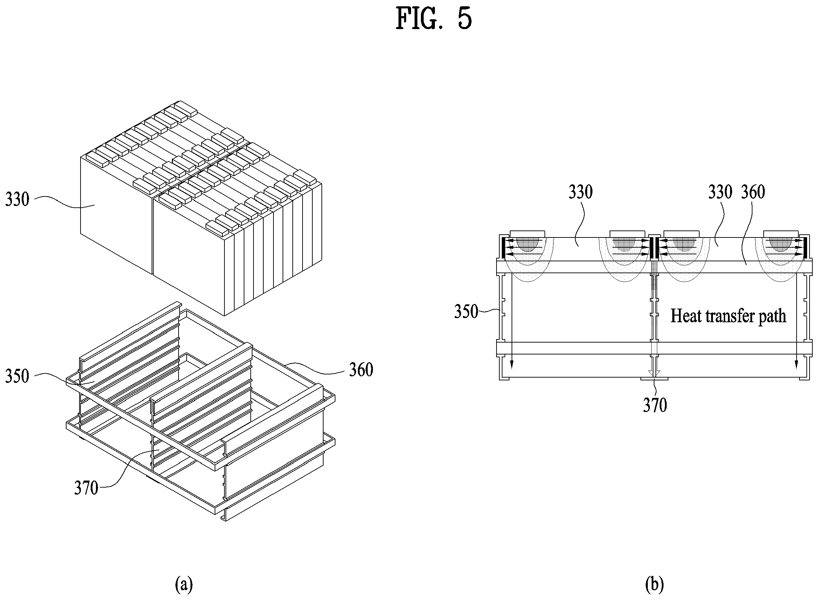

FIG. 5 is a diagram showing some components of a battery module assembly according to a third embodiment in more detail. FIG. 5 (a) illustrates a state in which a cell array 330, a side guide bracket 350, an inner guide bracket 370, and a tightening band 360 are separated. In addition, FIG. 5 (b) is a front diagram showing a state in which the cell array 330, the side guide bracket 350, the inner guide bracket 370, and the tightening band 360 are coupled together.

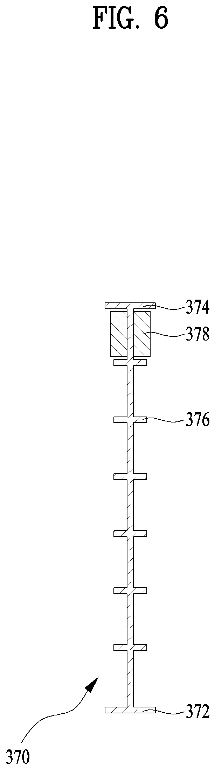

FIG. 6 shows a cross section of the inner guide bracket 370 according to the third embodiment in detail.

Hereinafter, components of the battery module assembly according to the third embodiment will be mainly described based on differences from other embodiments.

Referring to FIG. 6, an inner guide bracket 370 according to a third embodiment is provided with a bottom flange 372 and a top flange 374, and includes a plurality of ribs 376 protruding from a WEB. In addition, the internal guide bracket 370 may further include a cell contact part 378 connected to the WEB.

A plurality of the ribs 376 may protrude from both side surfaces of the WEB and extend in a longitudinal direction. In addition, a plurality of the ribs 376 may be formed at predetermined intervals vertically from the side surface of the WEB. The ribs 376 protruding from the WEB may reinforce the flexural rigidity of the internal guide bracket 370 to increase the durability of the battery module assembly. In addition, the ribs 376 may serve as stoppers for managing the compression amount of the cell contact part 378 described below.

The cell contact part 378 may be connected to both side surfaces of the WEB. The cell contact part 378 may contact the cell array 330 to function as a path for effectively emitting heat generated from the cell array 330. A position of the cell contact part 378 may be positioned at a height in the range of 0.5H to 1H when the entire height of the WEB is H. The cell contact part 378 may include a heat conduction surfactant, and may be a semi-solid type or a gel type of a material having smooth heat conduction (for example, silicon). Since the heat generated from the cell array 330 is mainly concentrated on an electrode (cell tab), the cell contact part 378 may be connected to an uppermost end of the WEB relatively close to a position of the electrode. Therefore, the heat generated from the electrode is transferred to the WEB through the cell contact part 378 and discharged downward, thereby increasing the cooling effect of the battery module assembly.

Meanwhile, referring to FIG. 5, the side guide bracket 350 according to the third embodiment has a height of a side support portion as long as the height of the cell array 330, and the side guide bracket 350 may include a cell contact portion at a top end portion of an inner surface. The cell contact part of the side guide bracket 350 may include a material (e.g., silicon) having smooth heat conduction, and may be a semi-solid type or a gel type. Heat generated from the electrode of the cell array 330 is transferred to the side support portion through the cell contact part of the side guide bracket 350 and discharged downward, thereby generating a cooling effect of the battery module assembly. The degree of protrusion of ribs protruding from the outer surface of the side guide bracket 350 may be managed to be less than or equal to the thickness of the tightening band 360.

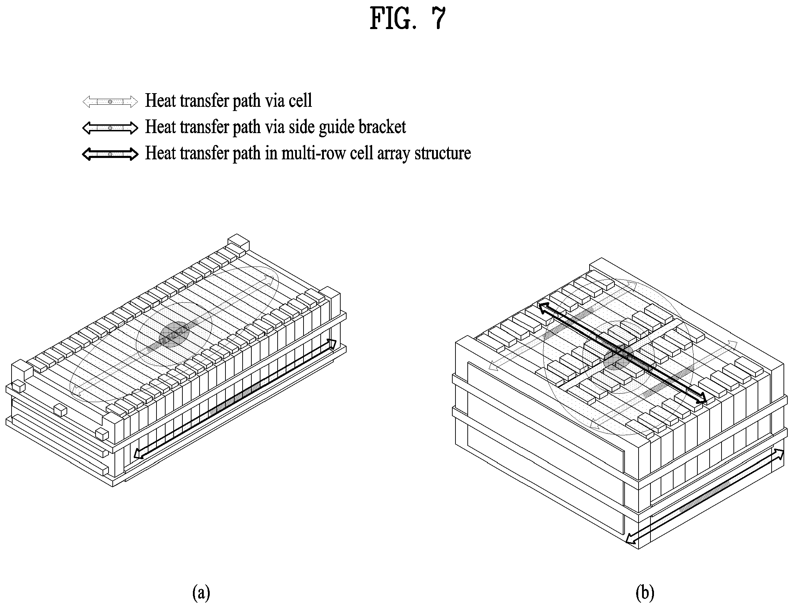

FIG. 7 (a) illustrates a heat transfer path of the battery module assembly according to the first embodiment, and FIG. 7 (b) illustrates a heat transfer path of the battery module assembly according to the second or third embodiment.

Referring to FIG. 7 (a), a battery module assembly is characterized in including a cell assembly configured in a row. Heat generated from the cell assembly is concentrated in a central part of the cell array. The heat is emitted in a longitudinal direction of the cell array and is additionally emitted through the side guide bracket, thereby increasing the cooling effect of the battery module assembly.

Referring to FIG. 7 (b), a battery module assembly includes a multi-row cell array. That is, in the battery module assembly of FIG. 7 (b), a plurality of cell arrays are connected in a transverse direction to form a multi-row structure. In this case, heat generated from the cell array is concentrated in the central part of the cell arrays, and the generated heat is transferred through the cell array or through the side guide bracket so as to be discharged. In addition, since heat is transferred between the cell arrays in the multi-row structure, heat can be discharged additionally, and the heat of the cell arrays is discharged downward through the inner guide bracket, thereby efficiently relieving the accumulated heat. Overall durability is improved by temperature leveling of the upper and lower portions of the cell arrays.

Meanwhile, a method of manufacturing a battery module assembly according to embodiments will be described below. The names and contents of the components to be described below are the same as those described above for the battery module assembly according to the embodiments.

A method of manufacturing a battery module assembly according to embodiments may include configuring at least two cell arrays by stacking a plurality of battery cells in one direction, forming a multi-row structure by connecting the at least two cell arrays in a transverse direction, and pressurizing one side and the other side of the cell arrays disposed in the multi-row structure with a side plate.

The forming the multi-row structure may dispose an inner guide bracket having an I-type cross section with a top flange and a bottom flange between the cell arrays. In this case, the inner guide bracket includes a rib protruding from a WEB to extend in a longitudinal direction of the inner guide bracket. In addition, the inner guide bracket may include a cell contact part connected to the WEB so as to come in contact with the cell array.

The battery module assembly manufacturing method according to the embodiments may include disposing a side guide bracket on a lateral side of the cell array after the forming the multi-row structure.

Meanwhile, the battery module assembly according to the embodiments may be used for a vehicle. That is, the vehicle may include a battery pack including the battery module assembly according to the embodiments, and may perform a vehicle driving or other driving assistance function using electric energy stored in the battery module assembly. A device including the battery module assembly according to embodiments is not limited to the vehicle.

Ae battery module assembly according to embodiments is advantageous for standardization and commonization of the battery module assembly by easily producing parts in suitable sizes according to the size or arrangement method of a cell array. For example, a length of a tightening band can be easily adjusted according to the number of cell stacks in the cell array, and lengths of components such as side guide brackets or inner guide brackets can be easily adjusted to apply to a module. In the case of a side plate, it may be commonly applied irrespective of the number of cell stacks. In addition, the battery module assembly according to the embodiments secures the scalability of a package layout through the application of a multi-row structure of the cell array.

A battery module assembly according to embodiments may directly cool a cell bottom portion for cooling, thereby improving the degree of freedom in arranging a cooling layout and reflecting it in the design standardization. In this case, the method of directly cooling the cell bottom portion avoids the application of additional heat exchange members to reduce weight and cost, and improves energy density over volume/weight.

In addition, a tightening band configuration not only improves the coupling of the components, but also forms a face pressure structure that prevents swelling of cells, which is advantageous for weight reduction and cost reduction. Each component may be made by aluminum extrusion or press or made of a plastic material to reduce weight and ensure insulation performance.

A detailed description of preferred embodiments of the present disclosure disclosed as described above is provided so that those skilled in the art can implement and embody the present disclosure. Although the description is made with reference to the preferred embodiments of the present disclosure, it will be appreciated by those skilled in the art that various modifications and variations can be made in the present disclosure without departing from the spirit or scope of the disclosures. For example, those skilled in the art may use the respective components described in the above-described embodiments in a manner of combining them with each other.

Therefore, the present disclosure is not intended to be limited to the embodiments shown herein, but to give the broadest scope that matches the principles and novel features disclosed herein.

As described above, related contents have been described in the best mode for carrying out the embodiments.

While this disclosure includes specific examples, it will be apparent after an understanding of the disclosure of this application that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, an d/or replaced or supplemented by other components. The invention is defined by the appended claims.

## Claims

1. A battery module assembly, comprising:
a cell array configured by stacking a plurality of cells in a same direction; and
a side plate connected to one lateral side of the cell array to pressurize the cell array,
wherein plural ones of the cell array are connected in a transverse direction to form a multi-row structure,
wherein the battery module assembly further comprises an inner guide bracket (370) disposed between the plural ones of the cell array,
wherein the inner guide bracket has an I-type cross-section with a top flange (374) and a bottom flange, (372) and
wherein the inner guide bracket comprises a rib (376) protruding from a WEB to extend in a longitudinal direction of the inner guide bracket and a cell contact part (378) connected to the WEB to contact the cell array.

2. The battery module assembly of claim 1, wherein the contact part is connected to the WEB in a range of 0.5 H to 1 H of a height (H) of the WEB.

3. The battery module assembly of claim 1 or 2, wherein the bottom flange of the inner guide bracket is configured to support the cell array, and a bottom side of the top flange is configured to contact the cell array.

4. The battery module assembly of any one of claims 1 to 3, further comprising side guide brackets (350) disposed adjacent to outermost transverse surfaces of the plural ones of the cell array,
wherein each of the side guide brackets comprises a bottom support portion supporting a bottom side of the cell array.

5. The battery module assembly of claim 4, wherein each of the side guide brackets is configured to extend in a longitudinal direction of the cell array and comprises a plurality of ribs formed on an outer surface of each of the side guide brackets, and each of the ribs is spaced apart from another by a prescribed interval in a vertical direction.

6. The battery module assembly of claim 4 or 5, wherein each of the side guide brackets comprises a cell contact part connected to an inner surface to contact with the cell array, and wherein the cell contact part is a semi-solid type.

7. The battery module assembly of claim 5 or 6, further comprising a tightening band disposed outside of the side guide bracket along the prescribed interval of the ribs to enclose and tighten outer surfaces of the plural ones of the cell array,
wherein the tightening band is made of a metal material.

8. The battery module assembly of any one of claims 1 to 7, wherein the cells comprise prismatic battery cells.

9. A method of manufacturing a battery module, the method comprising:
configuring at least two cell arrays by stacking, for each of the at least two cell arrays, a plurality of battery cells in a same direction;
forming a multi-row structure by connecting the at least two cell arrays in a transverse direction; and
cinching sides of the at least two cell arrays disposed in the multi-row structure with a side plate,
wherein the forming of the multi-row structure comprises disposing an inner guide bracket I (370) having an I-type cross section with a top flange (374) and a bottom flange (372) between the at least two cell arrays,
wherein the inner guide bracket comprises a rib (376) protruding from a WEB to extend in a longitudinal direction of the inner guide bracket, and
wherein the inner guide bracket comprises a cell contact part (378) connected to the WEB to contact with the cell array.

## Patentansprüche

1. Batteriemodulanordnung, umfassend:
eine Zellenanordnung, die durch Stapeln einer Mehrzahl von Zellen in derselben Richtung ausgebildet ist; und
eine Seitenplatte, die mit einer lateralen Seite der Zellenanordnung verbunden ist, um die Zellenanordnung mit Druck zu beaufschlagen,
wobei mehrere der Zellenanordnungen in einer Querrichtung miteinander verbunden sind, um eine mehrreihige Struktur auszubilden,
wobei die Batteriemodulanordnung ferner eine innere Führungshalterung (370) umfasst, die zwischen den mehreren Zellenanordnungen angeordnet ist,
wobei die innere Führungshalterung einen I-förmigen Querschnitt mit einem oberen Flansch (374) und einem unteren Flansch (372) aufweist, und
wobei die innere Führungshalterung eine Rippe (376), die von einem Steg vorsteht, um sich in einer Längsrichtung der inneren Führungshalterung zu erstrecken, und einen Zellkontaktabschnitt (378), der mit dem Steg verbunden ist, um die Zellenanordnung zu kontaktieren, umfasst.

2. Batteriemodulanordnung nach Anspruch 1, wobei der Kontaktabschnitt in einem Bereich von 0,5 H bis 1 H einer Höhe (H) des Stegs mit dem Steg verbunden ist.

3. Batteriemodulanordnung nach Anspruch 1 oder 2, wobei der untere Flansch der inneren Führungshalterung dazu eingerichtet ist, die Zellenanordnung zu stützen, und eine Unterseite des oberen Flansches dazu eingerichtet ist, die Zellenanordnung zu kontaktieren.

4. Batteriemodulanordnung nach einem der Ansprüche 1 bis 3, ferner umfassend Seitenführungshalterungen (350), die benachbart zu äußersten Querflächen der mehreren Zellenanordnungen angeordnet sind,
wobei jede der Seitenführungshalterungen einen unteren Stützabschnitt umfasst, der eine Unterseite der Zellenanordnung stützt.

5. Batteriemodulanordnung nach Anspruch 4, wobei jede der Seitenführungshalterungen dazu eingerichtet ist, sich in einer Längsrichtung der Zellenanordnung zu erstrecken, und eine Mehrzahl von Rippen umfasst, die an einer Außenfläche jeder der Seitenführungshalterungen ausgebildet sind, und jede der Rippen in einer vertikalen Richtung um einen vorgegebenen Abstand von einer anderen Rippe beabstandet ist.

6. Batteriemodulanordnung nach Anspruch 4 oder 5, wobei jede der Seitenführungshalterungen einen Zellkontaktabschnitt umfasst, der mit einer Innenfläche verbunden ist, um die Zellenanordnung zu kontaktieren, und wobei der Zellkontaktabschnitt von einem halbfesten Typ ist.

7. Batteriemodulanordnung nach Anspruch 5 oder 6, ferner umfassend ein Spannband, das außerhalb der Seitenführungshalterung entlang des vorgegebenen Abstands der Rippen angeordnet ist, um Außenflächen der mehreren Zellenanordnungen zu umschließen und festzuspannen,
wobei das Spannband aus einem metallischen Material gefertigt ist.

8. Batteriemodulanordnung nach einem der Ansprüche 1 bis 7, wobei die Zellen prismatische Batteriezellen umfassen.

9. Verfahren zum Herstellen eines Batteriemoduls, wobei das Verfahren umfasst:
Ausbilden von mindestens zwei Zellenanordnungen durch Stapeln einer Mehrzahl von Batteriezellen in derselben Richtung für jede der mindestens zwei Zellenanordnungen;
Ausbilden einer mehrreihigen Struktur durch Verbinden der mindestens zwei Zellenanordnungen in einer Querrichtung; und
Verspannen von Seiten der mindestens zwei in der mehrreihigen Struktur angeordneten Zellenanordnungen mittels einer Seitenplatte,
wobei das Ausbilden der mehrreihigen Struktur ein Anordnen einer inneren Führungshalterung (370), die einen I-förmigen Querschnitt mit einem oberen Flansch (374) und einem unteren Flansch (372) aufweist, zwischen den mindestens zwei Zellenanordnungen umfasst,
wobei die innere Führungshalterung eine Rippe (376) umfasst, die von einem Steg vorsteht, um sich in einer Längsrichtung der inneren Führungshalterung zu erstrecken, und
wobei die innere Führungshalterung einen Zellkontaktabschnitt (378) umfasst, der mit dem Steg verbunden ist, um die Zellenanordnung zu kontaktieren.

## Revendications

1. Ensemble module de batterie, comprenant:
un réseau de cellules constitué par empilement d'une pluralité de cellules dans une même direction; et
une plaque latérale reliée à l'un côté latéral du réseau de cellules afin de mettre sous pression le réseau de cellules,
dans lequel plusieurs cellules du réseau de cellules sont reliées dans une direction transversale pour former une structure à plusieurs rangées,
dans lequel l'ensemble module de batterie comprend en outre un support de guidage intérieur (370) disposé entre plusieurs cellules du réseau de cellules,
dans lequel le support de guidage intérieur présente une section transversale en forme de I comportant un bord supérieur (374) et un bord inférieur (372), et
dans lequel le support de guidage intérieur comprend une nervure (376) faisant saillie à partir d'une âme pour s'étendre dans la direction longitudinale du support de guidage intérieur, et une partie de contact de cellule (378) reliée à l'âme pour entrer en contact avec le réseau de cellules.

2. Ensemble module de batterie selon la revendication 1, dans lequel la partie de contact est reliée à l'âme dans une plage comprise entre 0,5 H et 1 H de la hauteur (H) de l'âme.

3. Ensemble module de batterie selon la revendication 1 ou 2, dans lequel le bord inférieur du support de guidage intérieur est conçue pour soutenir le réseau de cellules, et la face inférieure du bord supérieur est conçue pour venir en contact avec le réseau de cellules.

4. Ensemble module de batterie selon l'une quelconque des revendications 1 à 3, comprenant en outre des supports de guidage latéraux (350) disposés à proximité des surfaces transversales les plus extérieures de plusieurs cellules du réseau de cellules,
dans lequel chacun des supports de guidage latéraux comprend une partie de support inférieure qui soutient la face inférieure du réseau de cellules.

5. Ensemble module de batterie selon la revendication 4, dans lequel chacun des supports de guidage latéraux est conçu pour s'étendre dans la direction longitudinale du réseau de cellules et comprend une pluralité de nervures formées sur la surface extérieure de chacun des supports de guidage latéraux; et chacune des nervures est espacée des autres d'un intervalle prédéfini dans la direction verticale.

6. Ensemble module de batterie selon la revendication 4 ou 5, dans lequel chacun des supports de guidage latéraux comprend une partie de contact de cellule reliée à une surface intérieure pour entrer en contact avec le réseau de cellules, dans lequel la partie de contact de cellule est de type semi-solide.

7. Ensemble module de batterie selon la revendication 5 ou 6, comprenant en outre une bande de serrage disposée à l'extérieur du support de guidage latéral, le long de l'intervalle prescrit entre les nervures, afin d'entourer et de serrer les surfaces extérieures de plusieurs cellules du réseau de cellules,
dans lequel la bande de serrage est métallique.

8. Ensemble module de batterie selon l'une quelconque des revendications 1 à 7, dans lequel les cellules comprennent des cellules de batterie prismatiques.

9. Procédé de fabrication d'un module de batterie, le procédé comprenant:
la constitution d'au moins deux réseaux de cellules par empilement d'une pluralité de cellules de batterie dans la même direction pour chacun des au moins deux réseaux de cellules;
la formation d'une structure à plusieurs rangées par assemblage des au moins deux réseaux de cellules dans la direction transversale; et
le serrage des au moins deux réseaux de cellules disposés dans la structure à plusieurs rangées à l'aide d'une plaque latérale,
dans lequel la formation de la structure à plusieurs rangées comprend la mise en place d'un support de guidage intérieur (370) présentant une section transversale en forme de I avec un bord supérieur (374) et un bord inférieur (372) entre les au moins deux réseaux de cellules,
dans lequel le support de guidage intérieur comprend une nervure (376) faisant saillie à partir d'une âme pour s'étendre dans la direction longitudinale du support de guidage intérieur, et
dans lequel le support de guidage interne comprend une partie de contact de cellule (378) reliée à l'âme afin d'entrer en contact avec le réseau de cellules.
